# EUROPÄISCHE PATENTANMELDUNG

(11) **EP 2 110 775 A2**
(43) Veröffentlichungstag der Anmeldung: **21.10.2009**
(21) Anmeldenummer: 09100123.0
(22) Anmeldetag: 18.02.2009
(51) Int. Cl.: G06K 7/10

(54) **Vorrichtung und Verfahren zur Erkennung zumindest eines Objektes in einer Verpackung**

(30) Priorität: 16.04.2008 DE 102008001211
(71) Anmelder: Robert Bosch GmbH, 70442 Stuttgart (DE)
(72) Erfinder: Stroinski, Uwe, 71336, Waiblingen (DE); Mayer, Anton, 82205, Gilching (DE)

(57) **Zusammenfassung**

Es werden ein Verfahren und eine Vorrichtung zur Erkennung zumindest eines Objekts in einer Verpackung vorgeschlagen, wobei zumindest ein Objekt (12, 14, 16) mit einer Kodierung (20) versehen ist und in einer Verpackung (10) angeordnet ist, umfassend folgende Schritte:
- die Kodierung (20) wird durch die Verpackung (10) hindurch mit elektromagnetischer Anregungsstrahlung (30) bestrahlt,
- die Kodierung (20) emittiert bei Bestrahlung mit der elektromagnetischen Anregungsstrahlung (30) elektromagnetische Strahlung (32), die gegenüber der Anregungsstrahlung (30) höher- oder niedrigenergetisch ist,
- wobei die elektromagnetische Strahlung (32) ausgewertet wird, ob sich das Objekt (12, 14, 16) in der Verpackung (10) befindet.

## Beschreibung

### Stand der Technik

Die vorliegende Erfindung betrifft eine optische Kodierung, ein Verfahren zur Herstellung der Kodierung, einen Informationsträger der eine optische Kodierung aufweist und ein Verfahren zum automatisierten Auslesen der Kodierung in bereits geschlossenen Verpackungsgebinden.

Aus der EP-A 1 736 914 sind bereits eine optische Kodierung und ein Verfahren zu deren Herstellung bekannt. Eine optische Kodierung emittiert bei Bestrahlung mit elektromagnetischer Anregungsstrahlung aus dem infraroten Spektrum elektromagnetische Strahlung, die gegenüber der Anregungsstrahlung niedrigerenergetisch ist. Die optische Kodierung kann auf oder in jede Art von Informationsträger auf- bzw. eingebracht werden, wobei herkömmliche Druckverfahren eingesetzt werden können. Bestimmte Materialcharakteristika der optischen Kodierung können als Nachweis, auch der Originalität, des mit der optischen Kodierung versehenen Informationsträgers verwendet werden.

Der Endverbraucher, sei es ein Privat- oder auch Industriekunde, ist daran gewöhnt, seine Produkte nicht in offener Form oder Schüttform, sondern verpackt zu erhalten. Es sind unterschiedliche Verpackungsformen und -arten bekannt. Allen ist gemeinsam, dass sie sowohl als Transportgebinde als auch zum Schutz des Produktes eingesetzt werden können. Auch wird die Oberfläche der Verpackung als Informationsträger und zu gestalterischen Zwecken genutzt. Dies gilt besonders, aber nicht ausschließlich, für Kartonverpackungen.
Verschiedene Verpackungskomponenten werden zu Verpackungs- und Versandgebinden zusammengestellt. In diesen Gebinden befinden sich immer häufiger Kombinationen von einzelnen Produkten, seien es Kombipräparate in der Pharmazie, wo verschiedene Wirkstoffe getrennt voneinander zum Patienten kommen, oder auch z. B. Mehrkomponentenkleber, die auch erst zum Einsatz zusammen kommen dürfen. Speziell in der Pharmazie, aber nicht ausschließlich hier, kommen noch obligatorisch Beipackzettel zu den Medikamenten bzw. Produkten hinzu. Fehlen Produkte in einem Verpackungsgebinde, so ist dies für den Käufer erst einmal ärgerlich. Fehlt von einem Kombiprodukt ein Bestandteil, so ist das Produkt nicht mehr funktionsfähig oder - in pharmazeutischen Begriffen - nicht wirksam. Fehlt ein Beipackzettel in einer Medikamentenverpackung, ist dies ein schwerwiegender Fehler und das betroffene Verpackungslos muss zurückgerufen werden. Überprüfungen der Verpackungsinhalte werden heute schon durchgeführt, bieten aber keine Gewissheit, dass nach dem Verschließen der Verpackung auch wirklich noch alle Teile in der Verpackung sind. Versuche, die geschlossene Verpackungseinheit z. B. auszuwiegen, stoßen schnell an die Grenzen des technisch Machbaren. Beispielsweise ist das Gewicht von Beipackzetteln im Verhältnis zum Gewicht der Gesamtverpackung teilweise vernachlässigbar gering. Gravimetrisches Wiegen erkennt leichtere Inhalte bzw. Objekte im Verhältnis zu schweren Objekten nicht (Beispiel: Pharmazeutisches Produkt, z. B. 500 ml Glasflasche und Patienteninformation (Beipackzettel)).

Andere Verfahren, wie z. B. Ultraschall oder Durchleuchten mit Röntgenstrahlung oder anderen durchdringenden Strahlungsarten sind stark vom Verpackungsmaterial, von der Anordnung der zu erkennenden Objekte und natürlich vom Objekt selber abhängig.

Es ist daher Aufgabe der Erfindung, eine optische Kodierung von Produkten, ein Verfahren zur Herstellung der Kodierung auf oder in Produkten, einen Informationsträger, der eine optische Kodierung aufweist und ein Verfahren zum automatisierten Auslesen der Kodierung in bereits verschlossener Verpackung zur Verfügung zu stellen, wobei die Probleme aus dem Stand der Technik zumindest teilweise überwunden werden.

### Offenbarung der Erfindung

Diese Aufgabe wird gelöst durch die optische Kodierung, das Verfahren zur Herstellung einer optischen Kodierung, dem Informationsträger umfassend eine optische Kodierung und den Verfahren zum Auslesen einer optischen Kodierung auch in bereits verschlossenen Verpackungsgebinden mit den Merkmalen der unabhängigen Patentansprüche. Die Unteransprüche bezeichnen vorteilhafte Ausgestaltungen und Weiterbildungen der Erfindung.

Gemäß eines Aspektes der vorliegenden Erfindung wird ein optische Kodierung zur Verfügung gestellt, die bei Bestrahlung mit Strahlen aus einem ersten Energiespektrum Strahlen aus einem zweiten Energiespektrum emittiert, wobei das zweite Energiespektrum Strahlen niedrigerer Energien umfasst. Gemäß weiterer Aspekte der vorliegenden Erfindung wird ein Verfahren zur Herstellung einer derartigen optischen Kodierung vorgestellt, ein Informationsträger umfassend eine derartige optische Kodierung und das Verfahren zum Auslesen einer optischen Kodierung, auch in bereits verschlossenen Verpackungsgebinden, zur Verfügung gestellt.

Die erfindungsgemäße optische Kodierung hat den Vorteil, dass sie unter Tageslicht nicht als Kodierung erkennbar ist, wenn dies gewünscht wird. Darüber hinaus beeinflussen Verschmutzungen auf den Kodierungen nicht in dem Maße deren Lesbarkeit, wie es bei Kodierungen der Fall ist, die durch Strahlung im optisch sichtbaren Bereich angeregt werden. Dies liegt daran, dass die Anregungsstrahlung im infraroten Spektrum liegt und weniger von Verschmutzungen oder benutzten Verpackungskartonagen absorbiert wird als Strahlung im sichtbaren optischen Spektrum. Liegt sowohl, wie es nach einer bevorzugten Ausführungsform vorgeschlagen wird, die Anregungsstrahlung, als auch die emittierte Strahlung im infraroten Spektrum, wird ein vergleichsweise nur minimaler Anteil der Strahlung von beispielsweise Schmutz- oder über der Kodierung liegenden Papierschichten absorbiert. Somit wird die Auswertung erleichtert.

Weitere zweckmäßige Weiterbildungen ergeben sich aus weiteren abhängigen Ansprüchen und aus der Beschreibung.

### Zeichnung

Ein Ausführungsbeispiel der erfindungsgemäßen Vorrichtung ist in der Zeichnung dargestellt und wird nachfolgend näher beschrieben.

Es zeigen
die Figur 1 einen Teilausschnitt einer Verpackungsmaschine, bestehend aus mehreren Komponenten,
die Figur 2 eine Detailansicht der Detektionseinrichtung aus Figur 1
die Figur 3 die Detektionseinrichtung bei der Detektion einer Beilage mittels LNP-Bedruckung und IR-Quelle/Detektor,
die Figur 4 die Detektionseinrichtung bei der Detektion eines Füllguts durch die Verpackung und einen Beipackzettel hindurch,
die Figur 5 die Detektionseinrichtung bei der Detektion eines Füllguts und einer Beilage durch Auswertung der von beiden emittierten Strahlungen sowie
die Figur 6 den zeitlichen Verlauf der Strahlungsleistung.

Eine Verpackungsmaschine 4 besteht aus einer Fördereinrichtung 6, beispielsweise ein Transportband, das eine Verpackung 10 in den Einwirkungsbereich einer Einschubeinrichtung 8 befördert. Die Einschubeinrichtung befüllt die geöffnete Verpackung 10 mit einem Füllgut 12, beispielsweise das zu verpackende Produkt oder weitere Beilagen 16 wie Beipackzettel, Produktbeschreibungen oder ähnliches. Die Transporteinrichtung 6 fördert die befüllte Verpackung 10 zu einer Verschließeinrichtung 9. Die Verschließeinrichtung 9 wirkt beispielsweise quer zur Förderrichtung auf die noch offenen Seitenabschnitte der Verpackung 10 ein und legt sie im Sinne eines Verschließens um. Anschließend gelangt die nun verschlossene Verpackung 10 in den Einwirkungsbereich einer Detektionseinrichtung 26, auf deren Wirkungsweise später eingegangen wird. Anschließend gelangt die Verpackung 10 mit Füllgut 12 und ggf. Beilage 16 zu einem Auswerfer 11. Der Auswerfer 11 entfernt als fehlerhaft identifizierte Verpackungen 10, die nicht ordnungsgemäß befüllt waren. Die Identifikation einer fehlerhaft befüllter Verpackung 10 kann beispielsweise mit Hilfe der Detektionseinrichtung 26 durchgeführt werden.

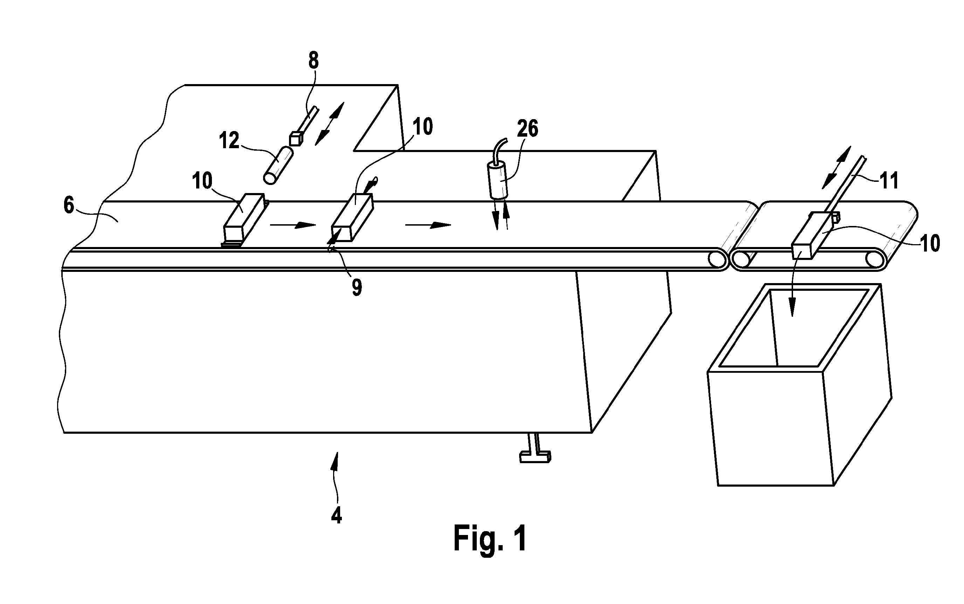

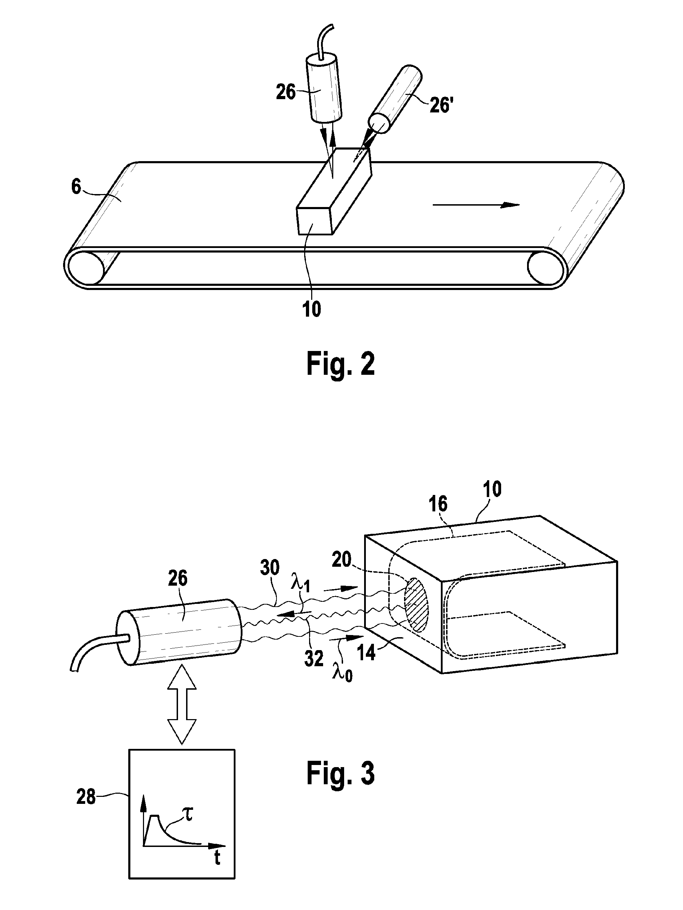

In Figur 2 ist die Detektionseinrichtung 26 aus Figur 1 näher dargestellt. Eine Sende-Empfangseinrichtung 26 ist oberhalb der Transporteinrichtung 6 angeordnet und emittiert und empfängt die Strahlung senkrecht zur Ebene der Transporteinrichtung 6.

Alternativ könnte die Sende-Empfangseinrichtung 26' auch parallel zur Ebene der Transporteinrichtung 6 Strahlung emittieren und/oder empfangen. In jedem Fall ist die Sende-Empfangseinrichtung 26 so angeordnet, dass die emittierte Anregungsstrahlung 32 durch die Seitenwand der auf der Transporteinrichtung 6 befindlichen Verpackung 10 ins Innere der Verpackung 10 gelangt.

Bei den Figuren 3 bis 5 sind nun unterschiedlich befüllte Verpackungen 10 gezeigt. Bei dem Beispiel nach Figur 3 soll eine Beilage 16, beispielsweise ein Beipackzettel, detektiert werden. Hierzu ist die Beilage 16 mit lumineszierenden Nanopartikeln 20 bedruckt.

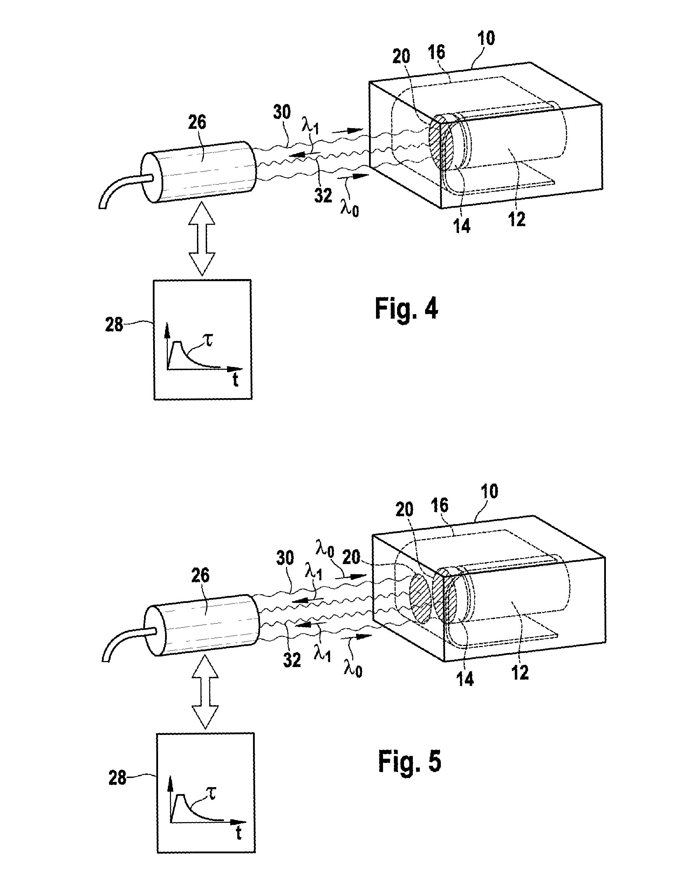

Bei dem Ausführungsbeispiel nach Figur 4 soll ein evtl. in der Verpackung 10 befindliches Füllgut 12 durch die Verpackung 10 und eine Beilage 16 hindurch detektiert werden. Bei dem Füllgut 12 handelt es sich beispielsweise um ein Behältnis wie eine Flasche, Vial o.ä. Das Füllgut 12 ist an einer Seite durch einen Verschluss 14 verschlossen. Das Füllgut 12 kann abgefülltes Produkt enthalten, das nicht eigens dargestellt ist. Der Verschluss 14 enthält lumineszierende Nanopartikel (LN P). Diese lumineszierenden Nanopartikel könnten beispielsweise einem Granulat zugesetzt sein, aus dem der Verschluss 14 in Form eines Spritzgießteils hergestellt ist oder mit einem mit LNP versetzten Lack beaufschlagt sein. Um die Verschlussseite des Füllguts 12 herum ist ebenfalls innerhalb der Verpackung 10 eine Beilage 16, beispielsweise ein Beipackzettel, angeordnet, der jedoch nicht mit lumineszierenden Nanopartikeln 20 versehen ist.

Das Ausführungsbeispiel gemäß Figur 5 unterscheidet sich von demjenigen nach Figur 4 dadurch, dass zusätzlich noch die Beilage 16 mit lumineszierenden Nanopartikeln 20 versehen ist. Damit lassen sich sowohl Füllgut 12 und Beilage 16 auf Vorhandensein detektieren.

Für alle Ausführungsbeispiele gemäß den Figuren 3 bis 5 ist befindet sich außerhalb der verschlossenen Verpackung 10 eine Sende-Empfangseinrichtung 26, die in das Innere der Verpackung 10 elektromagnetische Anregungsstrahlung 30 aussendet. Diese Anregungsstrahlung 30 regt die lumineszierenden Nanopartikel 20 je nach Ausführungbeispiel entweder der Beilage 16 bzw. des Verschlusses 14 an, eine elektromagnetische Strahlung 32 zu emittieren. Diese emittierte Strahlung 32 wird durch die Sende-Empfangseinrichtung 26 erfasst und mittels einer Steuer- und Auswerteeinheit 28 ausgewertet. Die emittierte Strahlung 32 gibt darüber Aufschluss, ob die verschlossene Verpackung 10 ordnungsgemäß mit Objekten - je nach Ausführungsbeispiel mit Füllgut 12 ggf. inklusive Verschluss 14 und Beilage 16 - befüllt ist.

Eine Kodierung 20 wird in Form der lumineszierenden Nanopartikel 20 zur Verfügung gestellt, die bei Bestrahlung mit Anregungsstrahlen 30 aus einem ersten Energiespektrum Strahlung 32 aus einem zweiten Energiespektrum emittiert, wobei das zweite Energiespektrum Strahlung 32 mit höherer Energie, vorzugsweise bis ca. 800 nm, oder niedrigerer Energie als das erste Energiespektrum umfasst.

Diese Art der Kodierung 20 hat den Vorteil, dass sie unter Tageslicht nicht als Kodierung erkennbar ist, wenn dies gewünscht wird. Darüber hinaus beeinflussen Verschmutzungen auf den Kodierungen 20 nicht in dem Maße deren Lesbarkeit, wie es bei Kodierungen der Fall ist, die durch Anregungsstrahlung 30 im optisch sichtbaren Bereich angeregt werden. Dies liegt daran, dass die Anregungsstrahlung 30 vorzugsweise im infraroten Spektrum liegt und weniger von Verschmutzungen oder benutzten Verpackungskartonagen absorbiert wird als Anregungsstrahlung 30 im sichtbaren optischen Spektrum. Liegen sowohl die Anregungsstrahlung 30 als auch die emittierte Strahlung 32 im infraroten Spektrum, wird ein vergleichsweise nur minimaler Anteil der Strahlung von beispielsweise Schmutz- oder über der Kodierung 20 liegenden Papierschichten absorbiert. Somit wird die Auswertung erleichtert. Die Anregungsstahlung 30 ist vorzugsweise aus dem infraroten Spektrum, insbesondere mit einer Wellenlänge von ca. 750 nm bis 1000 nm oder 1,5 µm bis 1,8 µm, insbesondere ca. 1540nm und 1750 nm, verwendet.

Die zur Kodierung 20 und zum automatisierten Auslesen der Kodierung 20 in bereits geschlossenen Verpackungen 10 oder Verpackungsgebinden benutzen Materialien gehören bevorzugt zu der Gruppe der Seltenen Erd-Keramiken. Es können aber auch andere Keramikmaterialien sein, die den gewünschten Effekt aufzeigen. So zeigen auch ZNS-, Ag-, Cu-Verbindungen die gewünschten Effekte. Genutzt wird eine optische Eigenschaft, die in der Physik unter dem Begriff "Stokesches Gesetz" bekannt ist. Diese Materialien absorbieren Licht aus einem bestimmten spektralen Bereich und emittieren Strahlung 32 einer längeren Wellenlänge. Die bevorzugt benutzten Seltenen Erdverbindungen nutzen Anregungsstrahlung 30 aus dem nahen Infrarotbereich, vorzugsweise zwischen 750 nm und 1000 nm, um Infrarot-Strahlung 32 im Bereich von 800 nm bis 1600 nm - vorzugsweise 1000 nm bis 1200 nm und 1500 nm bis 1800 nm - zu emittieren. Dieses ausgesendete Licht ist materialcharakteristisch in seiner Wellenlänge und in seinem zeitlichen Signalverhalten.

Bei dieser Kodierung 20 können unter Ausnutzung der materialcharakteristischen Eigenschaften der genutzten lumineszierenden Nanopartikel 20 optisch kodierte Objekte 12, 14, 16 auch in einer verschossenen Verpackung 10 bzw. einem verschlossenen Verpackungsgebinde lokalisiert werden. Dazu wird die sog. Eindringtiefe von Infrarotstrahlung in bzw. die sog. Durchdringtiefe durch Materialien - beispielsweise, aber nicht ausschließlich, Papierkartonage - genutzt.
Der Begriff Objekte 12, 14, 16 bzw. Informationsträger im Rahmen der vorliegenden Erfindung umfasst alle Gegenstände, auf die oder in die eine Kodierung 20 an- oder eingebracht werden kann. Dies ist entweder das Objekt selbst, wie z. B. eine Medikamentenflasche 12 oder beispielsweise Papier- oder Kunststoffblätter 16 wie z. B. Beipackzettel oder Etiketten. Die Kodierungen 20 können direkt auf den zu markierenden Objekten 12, 14, 16 angebracht werden, sofern deren Oberfläche eine hinreichende Haftung der Kodierung 20 erlaubt. Auch ist es möglich, die optische Kodierung 20 direkt in das Objekt 14 einzubringen, wie z. B. in Plastik, Kunstkunstharzen, Papier, Wachs oder Glas.

Darüber hinaus ist es möglich, dass die Kodierung 20 in oder auf Metallen eingebracht wird, wie z. B. Aluminium oder auch Magnesium. Typischerweise ist die optische Kodierung 20 maschinenlesbar. Die optische Kodierung 20 wird vorzugsweise mit Hilfe von bekannten Kodierungssystematiken kodiert oder ist eine proprietäre, speziell für den Einsatz der Kodierung 20 entwickelte, die die speziellen Materialeigenschaften der lumineszierenden Nanopartikel 20 nutzt und in einer Sensorik auswertet. Ferner umfasst der Begriff "optisches Spektrum" sowohl das infrarote, als auch das optisch sichtbare Spektrum.

Die benutzten Materialien, insbesondere die lumineszierenden Nanopartikel 20, werden auch zur Identifizierung genutzt, indem aus materialcharakteristischen Funktionen bei ihrer Anregung und/oder beim Nachleuchten, d. h. unmittelbar nach dem Abschalten der Anregungsstrahlung 30, spezifische objektindividuelle Informationen ausgelesen werden können. Derartige Informationen können beispielsweise Informationen zu der Materialzusammensetzung, zum Hersteller, zu Produktionslosen etc. sein.

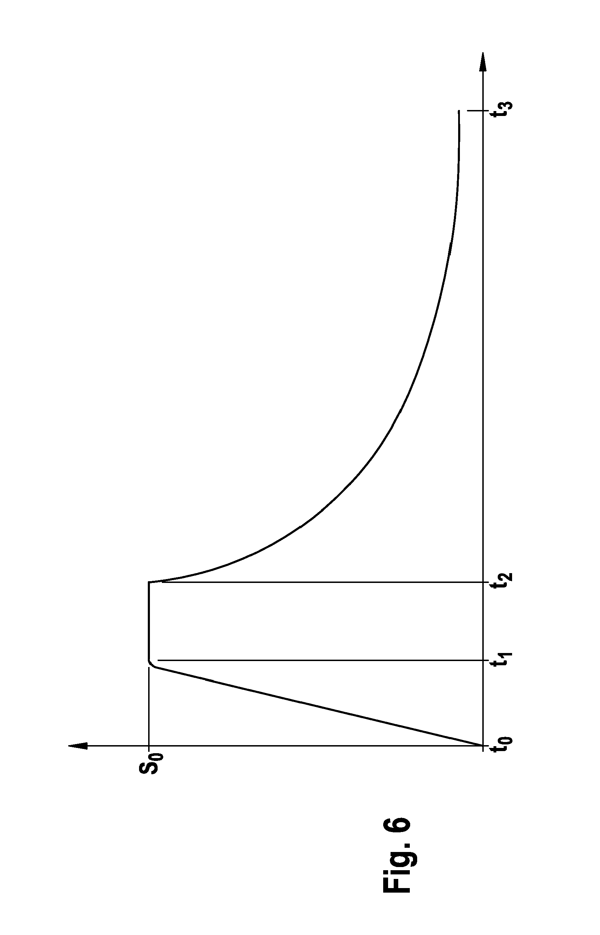

Bevorzugt ausgewertet werden die Lumineszenz, also die Zeit des Nachleuchtens nach dem Ausschalten der anregenden Strahlung 30, die Signalstärke S der Lumineszenz zu einem bestimmten Zeitpunkt nach dem Abschalten der anregenden Strahlung 30 und eine Kenngröße zur Nichtlinearität der Lumineszenz (errechnet aus dem Unterschied eines linearen Abfalls einer Funktion gegenüber dem Abfall einer e-Funktion). Mathematisch lässt sich das Nachleuchten in Form einer Abklingkurve als e-Funktion (Exponentialfunktion zur Basis e) mit einem materialcharakteristischen Wert Tau (τ) im Exponenten darstellen. Ein beispielhafter zeitlicher Verlauf der Strahlungsleistung ist in Figur 6 dargestellt.

In einem Ausführungsbeispiel wird die Abklingzeitkonstante Tau ermittelt und ausgewertet, indem die Nachleuchtzeit in n Messpunkte, zu denen die Signalstärke gemessen wird, eingeteilt wird. Die zeitliche Abfolge dieser Messungen lässt sich variieren, um der unterschiedlich langen Lumineszenz bei unterschiedlicher Kodierung 20 Rechnung zu tragen.

Die Signalstärke S₀ zum Beginn des Nachleuchtens ist abhängig vom Material und von der Konzentration des Materials. Beispielsweise erfolgt eine nahezu Verdopplung der Signalstärke, wenn sich zwei optisch kodierte Beipackzettel 16 in der verschlossenen Verpackung 10 befinden anstelle von nur einem einzigen wie beispielsweise in den Figuren 3 - 5 gezeigt.

Es ist in manchen Situationen wünschenswert, ein spezielles Kundengemisch der Kodierung 20 zu nutzen. Da die Kodierungen 20 in ihren Tau-Werten stark variieren können, zeigen die Mischungen dann ein spezifisches, aber jeweils unterschiedliches Tau. Die e-Funktionen überlagern sich und ergeben ein neues Tau, das reproduzierbar für die jeweilige Mischung erhalten wird.

In anderen Situationen kann eine reine Ja/Nein Erkennung durchgeführt werden abhängig davon, ob eine Kodierung 20 vorhanden ist oder nicht. In diesem Fall reicht es aus, die Abweichung der Lumineszenzkurve von einem linearen Abklingen zu bestimmen. Vereinfacht wird die Strahlung der Lumineszenzkurve in einem Intervall T₁ zu Beginn verglichen mit der Steigung der Kurve zu Ende der Lumineszenz T₂. Diese beiden Werte werden miteinander verglichen. Zur Ermittlung dieses Parameters reichen schon sehr geringe Signalstärken aus, d. h. schon bei geringen Konzentrationen oder auch größeren Messabständen werden sichere Ja/Nein Aussagen erhalten. Sichere Ja/Nein Erkennungen sind bis zu Konzentrationen von weniger als 0,01 g/m² LNP, bevorzugt ab 0,01 g/m² LNP bei Oberflächenmarkierungen oder unter 0,01 % bei Beimischungen, bevorzugt ab 0,01 % Beimischung in Festkörper, z.B. Kunststoffe erreichbar.

Es ist sinnvoll, dass zum Auslesen dieser Informationen Sende-Empfangseinrichtungen 26 zum Einsatz kommen, deren zeitliche Auflösung kleiner als 0,1 ms, insbesondere 500 bis 2 µs und kleiner ist. Typische Zeiten zwischen dem Einschalten der Anregung bis zum Erreichen eines Emissionsplateaus betragen 0,1 bis 1 ms und hängen in der Regel sowohl von der Art des Materials der Kodierung 20 als auch von der Temperatur ab. Unter Emissionsplateau wird ein Sättigungsleistungsemissionswert So verstanden, der angibt, wie viel Leistung von der optischen Kodierung 20 bei gleich bleibender Anregung emittiert wird. Typische Nachleuchtzeiträume zwischen dem Zeitpunkt T₂ des Ausschaltens der Anregung bis zum Ausklingen der Emission betragen zwischen 0,1 ms und einigen Hundert ms insbesondere 0,1 bis 50 ms und 0,1 bis 3 ms und hängen in der Regel sowohl von der Art des Materials als auch von der Temperatur ab. Unter Ausklingen der Emission wird dabei verstanden, dass weniger als 35 %, typischerweise 5 % der ursprünglich maximalen Emissionsleistung von der Kodierung 20 emittiert wird. Derartig variierbare Materialeigenschaften können teilweise oder vollständige Träger der kodierten Informationen sein. In anderen Worten kann die optische Kodierung 20 darin bestehen, dass unterschiedliche Objekte 12, 14, 16 mit unterschiedlichen Zusammensetzungen der gewählten Materialien als kodierender Informationsträger zusammen ausgemessen werden und dabei auf Grund der unterschiedlichen Materialcharakteristika, beispielsweise Anregungs- und Nachleuchteeigenschaften, spezifische Informationen übermitteln. Diese können wiederum als optische Kodierung ausgelesen und ausgewertet werden. Z. B. kann dadurch die Anwesenheit von einem, zwei oder auch mehreren Beipackzetteln 16 oder anderen Beilagen 16 in einem Verpackungsgebinde 10 mit einer einzigen Messung nachgewiesen werden, wenn die optische Kodierung 20 jedes Beipackzettels 16 beispielsweise mindestens um den Betrag 10 beim Parameter Tau voneinander abweicht. Beispielsweise trägt ein erster Beipackzettel 16A eine erste optische Kodierung 20A mit LNP mit einem Tau von 400. Der zweite Beipackzettel 16B weist ein Tau von 1100 auf. Die Auswerteeinheit 28 misst ein Tau von 400, wenn Beipackzettel 16A beiliegt. Die Auswerteeinheit 28 misst ein Tau von 1100, wenn nur Beipackzettel 16B beiliegt und ein Tau von ca. 750, wenn beide Beipackzettel 16A, 16B gleichzeitig gefunden werden.

In einer weiteren Variante der optischen Kodierung 20 wird Tau für jedes Objekt konstant gehalten, beispielsweise bei einem Beipackzettel 16. Ist der Beipackzettel 16 vorhanden, empfängt die Sende-Empfangseinrichtung 26 ein zur Strahlung 32 proportionales Signal. Ist kein Beipackzettel 16 vorhanden, empfängt sie kein Signal. Bei zwei Beipackzetteln 16 wird ein Signal empfangen, welches wesentlich stärker ist als bei nur einem Beipackzettel 16. Dadurch lässt sich der zweite Beipackzettel 16 erkennen.

In einer weiteren Ausprägung wird die empfangene vorzugsweise infrarote Strahlung 32 hinsichtlich ihrer Wellenlänge erfasst. Dies geschieht bevorzugt mit einem Lichtleiter. Dieser besitzt ein oder auch mehrere Lichtleiterkabel zum Empfang der vorzugsweise infraroten Strahlung 32. Durch einen optischen Teiler wird ein Teil der emittierten Strahlung 32 zur Bestimmung von z. B. Tau genutzt, der andere Teil wird auf einen Spektralanalysator geleitet. Dieser analysiert das emittierte Licht sowohl im sichtbaren Bereich, bevorzugt zwischen 250 nm bis 750 nm, als auch im infraroten Bereich, bevorzugt zwischen 750 nm bis 1800 nm. Diese Messmethode erlaubt eine hohe Auflösung von nebeneinander in einem Verpackungsgebinde liegenden, optisch kodierten Objekten 12, 14, 16 auch bei sehr kleinen Kodierungen 20 von unter 1 mm Durchmesser.

Die gängigen Druckverfahren, wie z. B. Laserdruck-, Rotationstiefdruck-, Flexodruck-, Offsetdruck-, Siebdruck-, Thermotransferdruck- oder Tintenstrahldruckverfahren können zum Drucken der Kodierung 20 eingesetzt werden. Die Druckfarbe umfasst eine Trägersubstanz, z. B. aber nicht ausschließlich Transparentweiß und das lumineszierende Material, das bei Anregung elektromagnetische Strahlung 30 emittiert. Die Korngröße des lumineszierenden Materials liegt vorzugsweise zwischen 0,005µm und 100 µm, besonders bevorzugt sind Korngrößen im Bereich von 0,05 µm bis 0,1 µm, 1 µm bis 5 µm oder 10 µm bis 100 µm.

Ein Verfahren zur Erkennung zumindest eines Objekts 12, 14, 16 in einer Verpackung 10 umfasst zumindest folgende Schritte:
- die Kodierung 20 wird auf zumindest einem Objekt 12, 14, 16 aufgebracht
- das Objekt 12, 14, 16 wird in eine Verpackung 10 gebracht
- die Kodierung 20 wird durch die Verpackung 10 hindurch mit elektromagnetischer Anregungsstrahlung 30 bestrahlt,
- wobei die Kodierung 20 bei Bestrahlung mit der elektromagnetischen Anregungsstrahlung 30 elektromagnetische Strahlung 32 emittiert, die gegenüber der Anregungsstrahlung 30 höher- oder niederenergetisch ist,
- wobei die elektromagnetische Strahlung 32 ausgewertet wird, ob sich das Objekt 12, 14, 16 in der Verpackung 10 befindet.

Die elektromagnetische Strahlung 32 wird nach den materialspezifischen Parametern der Kodierung 20 ausgewertet. Hierbei wird beispielsweise der zeitliche Verlauf, das zeitliche Abklingverhalten (Tau) oder die Signalstärke der elektromagnetischen Strahlung 32 ausgewertet. Zumindest ein charakteristischer Parameter (Tau, So) der elektromagnetischen Strahlung 32 wird mit einem Grenzwert verglichen zur Erkennung, ob sich das Objekt 12, 14, 16 in der Verpackung 10 befindet.
In einer Weiterbildung kann die elektromagnetische Strahlung 32 ausgewertet werden zur Erkennung, ob sich mehrere mit jeweils einer Kodierung 20 versehenen Objekte 12, 14, 16 in der Verpackung 10 befinden. Hierzu sind diese Objekte 12, 14, 16 jeweils mit in ihrem charakterischen Verhalten unterschiedlichen Kodierungen 20 versehen. Vorzugsweise unterscheiden sich die Kodierungen 20 hinsichtlich ihres zeitlichen Abklingverhaltens (Tau) und der Signalstärke So.

Diese Vorrichtung befindet sich vorzugsweise innerhalb einer Kartoniermaschine, kann aber auch als separates Prüfmodul peripher eingesetzt werden.

Mit Hilfe einer Vorrichtung und zunutze machen des beschriebenen physikalischen Effektes sollen Objekte 12, 14, 16 innerhalb einer bereits geschlossenen Verpackung 10 auf ihre Existenz nachgewiesen werden und, bei Bedarf, auch voneinander unterschieden werden können.

Das zu erkennende Packgut 12, 14, 16 muss vorab mit einer Kodierung 20 aus beispielsweise lumineszierenden Nanopartikeln kontaktiert werden. Dies kann durch Lackieren eines mit lumineszierenden Nanopartikeln angereicherten Klarlacks oder in mit lumineszierenden Nanopartikeln versetzter Inkjet-Tinte erfolgen. Bei Kunststoffteilen können diese lumineszierenden Nanopartikel 20 bereits im Spritzgießgranulat enthalten sein, beispielsweise bei der Herstellung eines Verschlusses 14 zum Verschließen des Füllguts 12.

Diese lumineszierenden Nanopartikel 20 emittieren infrarote elektromagnetische Strahlung 32, wenn sie ihrerseits mit elektromagnetischer Anregungsstrahlung 30 aus dem infraroten Spektrum angeregt werden. Die Frequenz der emittierten Strahlung 32 ist von den Eigenschaften der jeweiligen lumineszierenden Nanopartikel 20 und von der Frequenz der zur Anregung verwendeten Strahlung 30 abhängig. In dem System zur Erkennung von Objekten 12, 14, 16 in bereits verschlossenen Verpackungen 10 sind die Anregungsfrequenzen und die lumineszierenden Nanopartikel 20 aufeinander abgestimmt.

Die Anregungsstrahlung 30 durchdringt die Verpackung 10 und regt das Innen liegende, mit lumineszierenden Nanopartikeln 20 kodierte Objekt 12, 14, 16 an. Die emittierte Strahlung 32 durchdringt wiederum die Verpackung 10.
Als Sendeeinrichtung 26 dient beispielsweise eine Infrarot-Strahlungsquelle, bei der die abgegebene elektromagnetische Anregungsstrahlung 30 einstellbar ist. Vorzugsweise wird Infrarot-Strahlung zwischen 7500 und 1000 nm verwendet.
Die emittierte Strahlung 30 wird wiederum von einem oder mehreren Infrarot-Detektor(en) als Beispiel für eine Empfangseinrichtung 26 erfasst.

Soll mehr als ein Objekt 12, 14, 16 erkannt werden, so können verschiedene lumineszierende Nanopartikel 20, verschiedene Infrarot-Frequenzen oder räumlich unterschiedlich mit lumineszierenden Nanopartikeln 20 beaufschlagte Flächen verwendet werden.

In einer Kartoniermaschine werden z. B. Vials 12 mit pharmazeutischen Wirkstoffen verpackt. Das Vial 12 wird von dem Kunststoff-Stopfen 14 verschlossen. Der Stopfen 14 wurde aus einem Spritzgießgranulat, welches mit lumineszierenden Nanopartikeln 20 angereichert wurde, hergestellt. In der Kartonverpackung 10 ist nun dieses Vial 12 von einem Beipackzettel 16 C-förmig umschlossen.

Die Infrarot-Sendeeinrichtung 26 gibt Anregungsstrahlung 30 im Infrarotbereich in definierter Wellenlänge ab, die die Kartonverpackung 10 durchdringt. Beim Auftreten auf der mit definierten lumineszierenden Nanopartikeln 20 bedruckten Oberfläche des Beipackzettels 16 werden diese durch die Anregungsstrahlung 30 wie beschrieben angeregt. Die daraufhin emittierte Strahlung 32 durchdringt abermals die Verpackung 10 und trifft auf die Infrarot-Empfangseinrichtung 26. Diese auftreffende Strahlung 32 wird in elektrische Größen konvertiert. Die Steuer- und Auswerteeinheit 28 vergleicht die eingegangenen Werte mit den hinterlegten Sollwerten. Durch Ausnutzung der Signalstärke und der Größe Tau der Abklingfunktion lässt sich das Vorhandensein des Beipackzettels 16 eindeutig nachweisen.

Wird ein zweites Objekt, ein Beipackzettel 16 oder wie im Beispiel ein Vial 12 mit weiteren lumineszierenden Nanopartikeln 20 beaufschlagt, so lässt sich bei geeigneter Wahl der materialspezifischen Parameter, z. B. aber nicht ausschließlich Tau (τ), mit einer Messung ein Rückschluss auf die Präsenz der in der verschlossenen Verpackung 10 befindlichen Objekte 12, 14, 16 erzielen.

## Patentansprüche

1. Ein Verfahren zur Erkennung zumindest eines Objekts in einer Verpackung, wobei zumindest ein Objekt (12, 14, 16) mit einer Kodierung (20) versehen ist und in einer Verpackung (10) angeordnet ist,
umfassend folgende Schritte:
- die Kodierung (20) wird durch die Verpackung (10) hindurch mit elektromagnetischer Anregungsstrahlung (30) bestrahlt,
- die Kodierung (20) emittiert bei Bestrahlung mit der elektromagnetischen Anregungsstrahlung (30) elektromagnetische Strahlung (32), die gegenüber der Anregungsstrahlung (30) höherenergetisch oder niedrigerenergetisch ist,
- wobei die elektromagnetische Strahlung (32) ausgewertet wird, ob sich das Objekt (12, 14, 16) in der Verpackung 10 befindet.

2. Verfahren nach Anspruch 1, **dadurch gekennzeichnet, dass** der zeitliche Verlauf und/oder die Signalstärke und/oder die Wellenlänge der elektromagnetischen Strahlung (32) ausgewertet wird zur Erkennung, ob sich das Objekt (12, 14, 16) in der Verpackung (10) befindet.

3. Verfahren nach einem der vorhergehenden Ansprüche, **dadurch gekennzeichnet, dass** das zeitliche Abklingverhalten (Tau) der elektromagnetischen Strahlung (32) ausgewertet wird.

4. Verfahren nach einem der vorhergehenden Ansprüche, **dadurch gekennzeichnet, dass** zumindest ein charakteristischer Parameter (Tau, So) der elektromagnetischen Strahlung (32) mit einem Grenzwert verglichen ist zur Erkennung, ob sich das Objekt (12, 14, 16) in der Verpackung (10) befindet.

5. Verfahren nach einem der vorhergehenden Ansprüche, **dadurch gekennzeichnet, dass** die elektromagnetische Strahlung (32) ausgewertet wird zur Erkennung, ob sich mehrere mit jeweils einer Kodierung (20) versehenen Objekte (12, 14, 16) in der Verpackung (10) befinden.

6. Verfahren nach einem der vorhergehenden Ansprüche, **dadurch gekennzeichnet, dass** mehrere Objekte (12, 14, 16) jeweils mit unterschiedlichen Kodierungen (20) versehen sind, die sich beispielsweise hinsichtlich des ihres zeitlichen Abklingverhaltens (Tau) unterscheiden.

7. Verfahren nach einem der vorhergehenden Ansprüche, **dadurch gekennzeichnet, dass** als Anregungsstrahlung (30) Infrarotstrahlung, vorzugsweise mit einer Wellenlänge von ca. 750nm bis 1000 nm oder 1,5 µm, insbesondere ca. 1500nm, verwendet ist.

8. Verfahren nach einem der vorhergehenden Ansprüche, **gekennzeichnet durch** zumindest einen der weiteren Schritte:
- Aufbringen der Kodierung (20) auf zumindest einem Objekt (12, 14, 16) und/oder
- Einbringen des Objekts (12, 14, 16) in die Verpackung (10) und/oder
- Verschließen der Verpackung (10) und/oder
- Transportieren der Verpackung (10) zu einer Sende- und Empfangseinrichtung (26), die die Anregungsstrahlung (30) aussendet und/oder die elektromagnetische Strahlung (32) empfängt.

9. Verfahren nach einem der vorhergehenden Ansprüche, **dadurch gekennzeichnet, dass** abhängig von der Auswertung, ob sich das Objekt (12, 14, 16) in der Verpackung 10 befindet, die Verpackung (10) aussortiert wird.

10. Vorrichtung zur Erkennung zumindest eines Objekts in einer Verpackung, umfassend
- zumindest eine Sendeeinrichtung (26), die eine elektromagnetische Anregungsstrahlung (30) aussendet durch eine Verpackung (10) hindurch, in der zumindest ein mit einer Kodierung (20) versehendes Objekt (12, 14, 16) angeordnet ist,
- zumindest eine Empfangseinrichtung (26), die eine bei Bestrahlung der Kodierung (20) mit der elektromagnetischen Anregungsstrahlung (30) emittierte elektromagnetische Strahlung (32) erfasst, wobei die emittierte elektromagnetische Strahlung (30) gegenüber der Anregungsstrahlung (30) höher- oder niedrigerenergetisch ist,
- zumindest eine Auswerteeinheit (28), die die elektromagnetische Strahlung (32) auswertet zur Erkennung, ob sich das Objekt (12, 14, 16) in der Verpackung 10 befindet.

11. Vorrichtung nach einem der vorhergehenden Ansprüche, **dadurch gekennzeichnet, dass** als Kodierung (20) lumineszierende Nanopartikel verwendet sind.

12. Vorrichtung nach einem der Ansprüche 10 oder 11, weiterhin **gekennzeichnet durch**
- zumindest eine Einrichtung zum Aufbringen der Kodierung (20) auf zumindest einem Objekt (12, 14, 16) und/oder
- zumindest eine Einschubeinrichtung (8) zum Einschieben des Objekts (12, 14, 16) in die Verpackung (10) und/oder
- zumindest eine Verschließeinrichtung (9) zum Verschließen der Verpackung (10) und/oder
- zumindest eine Fördereinrichtung (6) zum Transportieren der Verpackung (10) zu der Sende- und Empfangseinrichtung (26) und/oder
- zumindest eine Auswurfeinrichtung (11) zum Aussortieren einer fehlerhaft befüllte Verpackung (10), für die die Auswerteeinheit (28) ein fehlendes Objekt (12, 14, 16) in der Verpackung (10) erkannt hat.
